Europäisches Patentamt

European Patent Office

Office européen des brevets

(11) Veröffentlichungsnummer: **0 293 685 B1**

(12) **EUROPÄISCHE PATENTSCHRIFT**

(45) Veröffentlichungstag der Patentschrift: **16.12.92**

(21) Anmeldenummer: **88108082.4**

(22) Anmeldetag: **20.05.88**

(51) Int. Cl.⁵: **C01G 37/027**, G11B 5/706

(54) **Verfahren zur Herstellung von stabilisiertem nadelförmigem ferromagnetischem Chromdioxid.**

(30) Priorität: **30.05.87 DE 3718299**

(43) Veröffentlichungstag der Anmeldung:
**07.12.88 Patentblatt 88/49**

(45) Bekanntmachung des Hinweises auf die
Patenterteilung:
**16.12.92 Patentblatt 92/51**

(84) Benannte Vertragsstaaten:
**DE FR GB NL**

(56) Entgegenhaltungen:
**EP-A- 0 198 110**
**FR-A- 2 190 735**
**US-A- 3 512 930**

**IBM TECHNICAL DISCLOSURE BULLETIN,
Band 25, Nr. 11B, April 1983, Seite 6031, New
York, US; R.S. HAINES: "Treatment of chromium dioxide particles"**

(73) Patentinhaber: **BASF Aktiengesellschaft**
**Carl-Bosch-Strasse 38**
**W-6700 Ludwigshafen(DE)**

(72) Erfinder: **Müller, Norbert, Dr.**
**Maximilianstrasse 23**
**W-6701 Friedelsheim(DE)**
Erfinder: **Ohlinger, Manfred, Dr.**
**Anselm-Feuerbach-Strasse 13**
**W-6710 Frankenthal(DE)**
Erfinder: **Feser, Rainer, Dr.**
**Colgensteiner Weg 25**
**W-6718 Grünstadt(DE)**
Erfinder: **Boettcher, Bernhard, Dr.**
**Im langen Tal 13 a**
**W-6719 Weisenheim(DE)**
Erfinder: **Rudolf, Peter, Dr.**
**Nibelungenweg 14**
**W-6701 Maxdorf(DE)**
Erfinder: **Hübner, Werner**
**Hauptstrasse 48 c**
**W-6710 Frankenthal(DE)**

**Beschreibung**

Die Erfindung betrifft ein Verfahren zur Herstellung von stabilisiertem nadelförmigem ferromagnetischem Chromdioxid durch eine Ausrüstung der durch eine reduktive Behandlung entstandenen Oberfläche des Chromdioxids.

Die Herstellung von nadelförmigem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise dem bei der Herstellung von magnetischen Aufzeichnungsträgern verwendeten organischen Polymerbindemitteln unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A-3 512 930 die Behandlung von Chromdioxid-Pulver mit einem Reduktionsmittel. Nach anderen Verfahren werden Aluminiumoxid-Überzüge (US-A-3 687 726) oder solche aus schwerlöslichen Metallphosphaten (US-A 3 686 031) erzeugt. Auch das Aufbringen von Metallverbindungen, deren Kationen zur Bildung schwerlöslicher Chromate befähigt sind, ist bereits bekannt (DE-B 21 52 331). Die JP-A-21200/76 schlägt zur Umhüllung der Chromdioxid-Teilchen das oberflächliche Aufbringen magnetischer Eisenoxide vor, während gemäß der DE-A-27 49 757 Eisen-(III)-haltige oxidische Niederschläge auf das Chromdioxid aufgebracht werden.

Alle diese Verfahren verbessern die Stabilität des Chromdioxids dadurch, daß entweder auf der Teilchenoberfläche ein Niederschlag abgeschieden wird, der sowohl aus einer Fremdsubstanz als auch aus einem schwerlöslichen Chromat bestehen kann, oder die Teilchenoberfläche reduktiv behandelt wird, wodurch auch als Oberflächenschicht eine stabile Verbindung des dreiwertigen Chroms entsteht. Trotz dieser Bemühungen die Stabilität des Chromdioxids zu gewährleisten und unter Beachtung der angebrachten Vorsichtsmaßnahmen bei der Verarbeitung zu magnetischen Aufzeichnungsträgern ist zu beobachten, daß die Stabilität der remanenten Magnetisierung dieser Aufzeichnungsträger nicht unbegrenzt ist. Wie umfangreiche Untersuchungen gezeigt haben, wird die Instabilität des Chromdioxid-Materials in einer Magnetschicht, insbesondere bei höheren Temperaturen vorwiegend durch die Feuchte der Umgebungsluft hervorgerufen. Durch den Angriff der Luftfeuchtigkeit wird das Chromdioxid in Umkehrung seiner Herstellreaktion in eine Chrom(III)oxid-haltige Verbindung und in Chromationen gespalten, wobei letztere die organischen Komponenten der Magnetschicht oxidativ angreifen. So wird die Stabilität des Chromdioxids in der Magnetschicht bei 0 % relativer Feuchte kaum beeinflußt, erst eine hohe relative Feuchte, von z.B. 95 %, führt selbst bei stabilisiertem Chromdioxid zu einem Rückgang. Dies zeigt, daß eine Stabilisierung des Chromdioxids nach dem Stand der Technik dieses zwar verbessert, unter ungünstigen Bedingungen aber nicht ausreichend ist, um den Einfluß des Wasserdampfes zu verhindern.

Es bestand daher die Aufgabe, die bekannten Verfahren der Stabilisierung des Chromdioxids so zu verbessern, daß die geschilderten Nachteile nicht auftreten und daß insbesondere ein Chromdioxid bereitgestellt wird, bei dem auch die gegebenenfalls nachträglich durch Disproportionierung entstehenden Chrom(VI)ionen keine Beeinträchtigung des magnetischen Aufzeichnungsträgers bewirken können.

Es wurde nun gefunden, daß mit einem Verfahren zur Herstellung von stabilisiertem nadelförmigem ferromagnetischem Chromdioxid durch Umsetzen von Oxiden des 3-wertigen und 6-wertigen Chroms bei 200 bis 600°C im Hochdruckreaktor bei 100 bis 700 bar in Gegenwart von Wasser unter Zusatz von mindestens einem Modifizierungsmittel und anschließender reduktiver Behandlung der Oberfläche des Chromdioxids in einer wäßrigen Suspension unter Ausbildung einer Verbindung des 3-wertigen Chroms auf der Oberfläche, die gestellte Aufgabe gelöst werden kann, wenn auf der Oberfläche eines durch die reduktive Behandlung stabilisierten Chromdioxids 0,1 bis 5 Gew.%, bezogen auf die Menge Chromdioxid, einer ein- oder mehrbasischen Hydroxycarbonsäure mit 2 bis 6 Kohlenstoffatomen adsorbiert werden.

Die Herstellung des nadelförmigen ferromagnetischen Chromdioxids ist bekannt ebenso wie die reduktive Behandlung des Chromdioxids zum Zwecke der Stabilisierung. So beschreiben beispielsweise die EP-B 27 640 sowie die EP-A 198 110 die Herstellung von Chromdioxidmaterialien, welche unter Zuhilfenahme von speziellen Modifizierungsmitteln auf der Basis von Antimon, Selen, Tellur und/oder Eisen oder

2

EP 0 293 685 B1

deren Verbindungen besonders vorteilhafte magnetische Eigenschaften und enge Teilchengrößenverteilungen aufweisen. Auch die reduktive Stabilisierung der Oberfläche dieser Chromdioxide ist dort angegeben. Außerdem beschreibt die US-A 3 512 930 diesen Vorgang. Bei der Herstellung kann es gegebenenfalls vorteilhaft sein, das Chromdioxid vor der reduktiven Behandlung einer Temperaturbehandlung zu unterwerfen. Dies kann beispielsweise dadurch geschehen, daß das bei der Synthese erhaltene Material nach einer Zerkleinerung auf eine Agglomeratgröße von 0,1 bis 1 mm bei 150 bis 350°C, im allgemeinen bei 270 bis 330°C getempert wird.

Zur Durchführung der erfindungsgemäßen Behandlung der Oberfläche des stabilsierten Chromdioxids wird dieses in Wasser durch z.B. kräftiges Rühren suspendiert. Dabei ist es zweckmäßig ein Verhältnis von 1 Teil Pulver auf mindestens 12 Teile Wasser einzuhalten. Zu dieser Suspension wird dann eine wäßrige Lösung einer ein- oder mehrbasischen Hydroxycarbonsäure mit 2 bis 6 Kohlenstoffatomen zugesetzt. Die Menge der gelösten Substanz kann anhand weniger Versuche ermittelt werden. Sie muß so bemessen sein, daß 0,1 bis 5 Gew.% der genannten Hydroxycarbonsäure auf der Oberfläche adsorbiert sind. Vorzugsweise wird die Menge so gewählt, daß 0,5 bis 2 Gew.%, bezogen auf die Menge Chromdioxid, adsorbiert sind. Die für das erfindungsgemäße Verfahren geeigneten ein- oder mehrbasischen Hydroxycarbonsäuren werden insbesondere aus der Gruppe bestehend aus Weinsäure, Zitronensäure und Ascorbinsäure ausgewählt. Nach weiterem Rühren über einen an sich üblichen Zeitraum von bis zu einer Stunde wird der feuchte Filterkuchen bei Raumtemperaturen unter 100°C, üblicherweise bei 50 bis 70°C, getrocknet.

Das nach der erfindungsgemäßen Behandlung erhaltene Chromdioxid zeichnet sich durch einen äußerst geringen Gehalt an eluierbaren Chrom(VI)ionen unter Beibehaltung der hervorragenden magnetischen Eigenschaften des Materials aus. Diese Verbesserung der Eigenschaften des Chromdioxidmaterials wirkt sich insbesondere dann aus, wenn es zur Herstellung von magnetischen Aufzeichnungsträgern eingesetzt wird und in die organische Polymere enthaltende Magnetschicht eingebettet ist.

Die Verarbeitung des erfindungsgemäß hergestellten Chromdioxids zu magnetischen Aufzeichnungsträgern erfolgt nach bekannten Methoden. Für die Herstellung der Magnetschicht werden 2 bis 5 Gew.-Teile Chromdioxid mit einem Teil des Bindemittels bzw. -gemisches sowie den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten polierten Walzen unter Druck hindurchgeführt. Danach betragen die Dicken der Magnetschichten üblicherweise zwischen 1,5 und 12 $\mu$m.

Als Bindemittel für die Magnetschichten können die bekannten Polymerbindemittel verwendet werden, wie Acrylat-Copolymere, Polyvinylacetate, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- und 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4′-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4′-Diisocyanatodiphenylmethan. Bevorzugte Polyesterurethane haben eine Shore-Härte A von 70 bis 100, einer Reißfestigkeit von 40 bis 42 N/mm$^2$ (nach DIN 53 455) und eine Reißdehnung (nach DIN 53 455) von etwa 440 bis 560 %. Der K-Wert nach H. Fikentscher (Cellulose-Chemie 3 (1931), Seite 58ff) liegt für die besonders geeigneten Polymerbindemittel zwischen 40 und 60.

Magnetische Aufzeichnungsträger, welche unter Verwendung des erfindungsgemäß hergestellten Chromdioxides gefertigt werden, zeichnen sich neben den bekannt guten elektroakustischen Kenndaten durch eine verbesserte Klimastabilität sowie durch gute mechanische Eigenschaften, insbesondere der Haftfestigkeit aus.

Die Erfindung sei anhand der folgenden Beispiele gegenüber einem Vergleichsversuch nach dem Stand der Technik näher erläutert. Die in den nachstehenden Beispielen und den Vergleichsversuchen genannten Teile und Prozente beziehen sich, soweit nicht anders angegeben, auf Gewicht. Volumenteile verhalten sich zu Teilen wie Liter zu Kilogramm.

Beispiel 1

In einen Reaktionsgefäß mit einem Volumen von 4 l werden 2,19 l Wasser vorgelegt. Dann werden unter Rühren zunächst 5,68 kg Chromsäureanhydid ($CrO_3$) zugegeben. Nach 10 Minuten werden dazu 26 g Kaliumantimonyltartrat ($KSbO(C_4H_4O_6).0,5\ H_2O$, Molgewicht 333,93), d.h. 0,33 Gew.-%, bezogen auf Chromdioxid, und 67 g nadelförmiges $\gamma$-$Fe_2O_3$, d.h. 0,85 Gew.-%, bezogen auf Chromdioxid, zugegeben. Ist die durch Zugabe des antimonhaltigen Modifizierungsmittels einsetzende Gasentwicklung abgeklungen, werden unter ständigem Rühren 2,84 kg Chrom(III)oxid eingetragen und weitere 20 Minuten gerührt. Danach wird die Reaktionsmaische in einem Autoklaven auf Temperaturen zwischen 300 und 350°C erhitzt. Dabei bildet sich Chromdioxid. Durch den entstehenden Sauerstoff baut sich ein Druck auf, der mittels Regelventil bei 300 bis 400 bar gehalten wird. Nach Reaktionsende wird der Reaktor so entspannt und abgekühlt, daß das Chromdioxid mit einer Restfeuchte von 1 bis 5 % anfällt. Es wird mechanisch aus dem Reaktorgefäß ausgeräumt, anschließend bei 300°C getempert, dann gemahlen und in einer wäßrigen Natriumsulfitlösung suspendiert und mittels Naßmühlen desagglomeriert. Dabei werden 10 % des Chromdioxids an der Kristalloberfläche reduziert und zu Chrom(III)oxidhydroxid überführt. Nach Filtration und Waschen wird das Chromdioxid erneut in Wasser suspendiert und mit 158 g Ascorbinsäure als 14 %iger Lösung (2 Gew.-% bezogen auf das Chromdioxid) versetzt, eine Stunde gerührt und nach der Filtration bei 50°C im Vakuum getrocknet.

An dem resultierenden Chromdioxid werden die spezifische Oberfläche nach BET in [$m^2$/g] sowie die magnetischen Eigenschaften mittels eines Schwingmagnetometers in einem Meßfeld von 160 kA/m bei einer mittleren Probendichte $\rho$[g/$cm^3$] bestimmt, und zwar die Koerzitivfeldstärke $H_c$ in (kA/m) sowie die spezifische Remanenz $M_r$/$\rho$ in (n$Tm^3$/g). Außerdem wurde der Gehalt an Chrom(VI)-ionen bestimmt und zwar photometrisch mit Diphenylcarbazid (DIN 53 780) in einem gemäß DIN 38 414-S4 erhaltenen wäßrigen Extrakt.

Die Meßergebnisse sind in der Tabelle 1 angegeben.

Vergleichsversuch 1

Es wird wie in Beispiel 1 beschrieben verfahren, jedoch ohne die Nachbehandlung mit Ascorbinsäure. Die Meßergebnisse sind in der Tabelle 1 angegeben.

Beispiel 2

In einem Reaktionsgefäß mit einem Volumen von 4 l werden 2,19 l Wasser vorgelegt. Dann werden unter Rühren zunächst 5,68 kg Chromsäureanhydid ($CrO_3$) zugegeben. Nach 10 Minuten werden dazu 26 g Kaliumantimonyltartrat ($KSbO(C_4H_4O_6).0,5\ H_2O$, Molgewicht 333,93) d.h. 0,33 Gew.-%, bezogen auf Chromdioxid, und 20 g nadelförmiges $\gamma$-$Fe_2O_3$, d.h. 0,25 Gew.-%, bezogen auf Chromdioxid, zugegeben. Ist die durch Zugabe des antimonhaltigen Modifizierungsmittels einsetzende Gasentwicklung abgeklungen, werden unter ständigem Rühren 2,84 kg Chrom(III)oxid eingetragen und weitere 20 Minuten gerührt. Danach wird die Reaktionsmaische in einem Autoklaven auf Temperaturen zwischen 300 und 350°C erhitzt. Dabei bildet sich Chromdioxid. Durch den entstehenden Sauerstoff baut sich ein Druck auf, der mittels Regelventil bei 300 bis 400 bar gehalten wird. Nach Reaktionsende wird der Reaktor so entspannt und abgekühlt, daß das Chromdioxid mit einer Restfeuchte von 1 bis 5 % anfällt. Es wird mechanisch aus dem Reaktorgefäß ausgeräumt, gemahlen und in einer wäßrigen Natriumsulfitlösung suspendiert und mittels Naßmühlen desagglomeriert. Dabei werden 10 % des Chromdioxids an der Kristalloberfläche reduziert und zu Chrom(III)oxidhydroxid überführt. In die wäßrige Chromdioxid-Suspension werden 32 g Ascorbinsäure als 4 %ige Lösung in Wasser (0,4 Gew.-%, bezogen auf $CrO_2$) eingebracht und noch eine Stunde gerührt. Nach Filtration und Waschen wird bei 50°C im Vakuum getrocknet.

Die Meßergebnisse sind in der Tabelle 1 angegeben.

Vergleichsversuch 2

Es wird wie in Beispiel 2 beschrieben verfahren, jedoch ohne die Nachbehandlung mit Ascorbinsäure. Die Meßergebnisse sind in Tabelle 1 angegeben.

Beispiel 3

In einem Reaktionsgefäß mit einem Volumen von 4 l werden 2,19 l Wasser vorgelegt. Dann werden unter Rühren zunächst 5,68 kg Chromsäureanhydrid (CrO$_3$) zugegeben. Nach 10 Minuten werden dazu 27 g Kaliumantimonyltartrat (KSbO(C$_4$H$_4$O$_6$).0,5 H$_2$O, Molgewicht 333,93), d.h. 0,34 Gew.-%, bezogen auf Chromdioxid, und 24 g nadelförmiges γ-Fe$_2$O$_3$, d.h. 0,3 Gew.-%, bezogen auf Chromdioxid, zugegeben. Ist die durch Zugabe des antimonhaltigen Modifizierungsmittels einsetzende Gasentwicklung abgeklungen, werden unter ständigem Rühren 2,84 kg Chrom(III)oxid eingetragen und weitere 20 Minuten gerührt. Danach wird die Reaktionsmaische in einem Autoklaven auf Temperaturen zwischen 300 und 350°C erhitzt. Dabei bildet sich Chromdioxid. Durch den entstehenden Sauerstoff baut sich ein Druck auf, der mittels Regelventil bei 300 bis 400 bar gehalten wird. Nach Reaktionsende wird der Reaktor so entspannt und abgekühlt, daß das Chromdioxid mit einer Restfeuchte von 1 bis 5 % anfällt. Es wird mechanisch aus dem Reaktorgefäß ausgeräumt, gemahlen und in einer wäßrigen Natriumsulfitlösung suspendiert und mittels Naßmühlen desagglomeriert. Dabei werden 10 % des Chromdioxids an der Kristalloberfläche reduziert und zu Chrom(III)oxidhydroxid überführt. Nach Filtration und Waschen wird das Chromdioxid erneut in Wasser suspendiert und mit 158 g Ascorbinsäure als 14 %iger wäßrigen Lösung (2 Gew.-%, bezogen auf das Chromdioxid) versetzt, eine Stunde gerührt und nach der Filtration bei 50°C im Vakuum getrocknet.

Die Meßergebnisse sind in der Tabelle 1 angegeben.

Vergleichsversuch 3

Es wird wie in Beispiel 3 beschrieben verfahren, jedoch ohne die Nachbehandlung mit Ascorbinsäure. Die Meßergebnisse sind in der Tabelle 1 angegeben.

Beispiel 4

Es wird wie in Beispiel 1 beschrieben verfahren, jedoch werden anstelle der Ascorbinsäure 135 g Weinsäure (2 Gew.-%, bezogen auf CrO$_2$) zur Nachbehandlung herangezogen.
Die Meßergebnisse sind in Tabelle 1 angegeben.

Beispiel 5

Es wird wie in Beispiel 1 beschrieben verfahren, jedoch werden anstelle der Ascorbinsäure 172 g Zitronensäure (2 Gew.-%, bezogen auf CrO$_2$) zur Nachbehandlung herangezogen.
Die Meßergebnisse sind in Tabelle 1 angegeben.

Beispiel 6

In einem Reaktionsgefäß mit einem Volumen von 4 l werden 2,19 l Wasser vorgelegt. Dann werden unter Rühren zunächst 5,68 kg Chromsäureanhydrid (CrO$_3$) zugegeben. Nach 10 Minuten werden dazu 23 g Kaliumantimonyltartrat (KSbO(C$_4$H$_4$O$_6$).0,5 H$_2$O, Molgewicht 333,93) d.h. 0,30 Gew.%, bezogen auf Chromdioxid, und 55 g nadelförmiges γ-Fe$_2$O$_3$, d.h. 0,68 Gew.%, bezogen auf Chromdioxid, zugegeben. Ist die durch Zugabe des antimonhaltigen Modifizierungsmittels einsetzende Gasentwicklung abgeklungen, werden unter ständigem Rühren 2,84 kg Chrom(III)oxid eingetragen und weitere 20 Minuten gerührt. Danach wird die Reaktionsmaische in einem Autoklaven auf Temperaturen zwischen 300 und 350°C erhitzt. Dabei bildet sich Chromdioxid. Durch den entstehenden Sauerstoff baut sich ein Druck auf, der mittels Regelventil bei 300 bis 400 bar gehalten wird. Nach Reaktionsende wird der Reaktor so entspannt und abgekühlt, daß das Chromdioxid mit einer Restfeuchte von 1 bis 5 % anfällt. Es wird mechanisch aus dem Reaktorgefäß ausgeräumt, gemahlen, 1 Stunde bei 300°C getempert und in einer 85°C heißen wäßrigen Natriumsulfitlösung suspendiert und mittels Naßmühlen desagglomeriert. Dabei werden 20 % des Chromdioxids an der Kristalloberfläche reduziert und zu Chrom(III)oxidhydroxid überführt. In die wäßrige Chromdioxid-Suspension werden 16 g Ascorbinsäure als 4%ige Lösung in Wasser (0,2 Gew.%, bezogen auf CrO$_2$) eingebracht und noch eine Stunde gerührt. Nach Filtration und Waschen wird bei 50°C im Vakuum getrocknet.
Die Meßergebnisse sind in Tabelle 1 angegeben.

Vergleichsversuch 6

Es wird wie in Beispiel 6 beschrieben verfahren, jedoch ohne die Nachbehandlung mit Ascorbinsäure. Die Meßergebnisse sind in Tabelle 1 angegeben.

Tabelle 1

|  | BET | $H_C$ | $M_r/\varrho$ | $CrO_3$ |
|---|---|---|---|---|
| Beispiel 1 | 25,9 | 44,4 | 42,0 | 0,3 |
| Vergl.Vers. 1 | 26,3 | 43,9 | 45,1 | 4,2 |
| Beispiel 2 | 25,6 | 38,8 | 43,6 | 3,2 |
| Vergl.Vers. 2 | 25,1 | 38,1 | 44,1 | 6,2 |
| Beispiel 3 | 26,4 | 40,5 | 44,8 | 0,34 |
| Vergl.Vers. 3 | 26,2 | 40,3 | 44,4 | 4,4 |
| Beispiel 4 | 27,1 | 43,9 | 43,6 | 2,3 |
| Beispiel 5 | 27,6 | 44,3 | 44,4 | 2,1 |
| Beispiel 6 | 22,5 | 39,7 | 40,1 | 0,0 |
| Vergl.Vers. 6 | 22,0 | 39,5 | 39,9 | 0,3 |

Beispiel B 1

In eine Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 26,3 kg einer 50 %igen Lösung des Polyharnstoffurethans gemäß Beispiel B der DE-A-32 27 161, 27,8 kg einer Polyesterurethanlösung, hergestellt nach DE-AS 27 53 694, 100 kg eines gemäß Beispiel 1 hergestellten Chromdioxids, 2,5 kg Zinkoleat, 0,25 kg eines handelsüblichen Siliconöls sowie 1 kg n-Butylstearat eingefüllt und der Ansatz 36 Stunden dispergiert. Die Dispersion wurde dann unter Druck filtriert und unmittelbar vor dem Auftragen auf eine 12 μm dicke Polyethylenterephthalatfolie unter Rühren mit, bezogen auf einen Teil Dispersion, 0,039 Teilen einer 75 %igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen anschließend bei Temperaturen zwischen 50 und 80°C getrocknet und durch Hindurchführen zwischen beheizten Walzen unter Druck geglättet, so daß sich eine Trockenschichtdicke von 5,5 μm ergab.

Die Oberfläche der Magnetschicht hatte eine mittlere Rauhigkeit Rz, gemessen nach DIN 4756, Blatt 1. von 0,15 μm. Die beschichtete Folie wurde in 3,81 mm breite Magnetbänder geschnitten.

Die Magnetbänder wurden wie folgt geprüft:

1. Magnetische Eigenschaften

Die Bestimmung der magnetischen Eigenschaften der resultierenden Magnetbänder erfolgte mittels eines Schwingmagnetometers bei einem Meßfeld von 160 kA/m. Dabei wurde die Koerzitivfeldstärke Hc in [kA/m] und die remanente Magnetisierung Mr in [mT] gemessen,sowie der Ausrichtfaktor Rf als der Quotient aus der Remanenz längs der magnetischen Vorzugsrichtung zu derjenigen in Querrichtung errechnet.

2. Elektroakustische Eigenschaften

Die Messung der elektroakustischen Banddaten erfolgt nach DIN 45 512, Blatt II gegen das Standard-Chromdioxidbezugsband C 520-R mit einem Vormagnetisierungsstrom von 20 mA. Alle elektroakustischen Banddaten, Tiefenaussteuerbarkeit $A_T$ und Empfindlichkeit $E_T$ bei 1 kHz, Höhenaussteuerbarkeit $A_H$ und Empfindlichkeit $E_H$ bei 10 kHz, Ruhegeräuschspannungsabstand $RG_o$ und Kopierdämpfung Ko, sind auf das Bezugsband C 520-R bezogen, wobei letzteres bei allen Meßgrößen gleich 0dB gesetzt wird.

### 3. Klimastabilität

An dem magnetischen Aufzeichnungsträger wurde die Klimastabilität bei 65°C und 95 % relativer Feuchte bestimmt und zwar wurde hierzu unter diesen Bedingungen ein magnetischer Aufzeichnungsträger im Klimaschrank eine Woche gelagert und jeweils die remanente Magnetisierung bei Raumtemperatur gemessen und in Prozent vom Anfangswert angegeben. Die Bestimmung der magnetischen Eigenschaften erfolgte mittels eines Schwingungsmagnetometers bei einem Meßfeld von 160 kA/m.

### 4. Eluat-Test

In Anlehnung an DIN 53 780 wird das wasserlösliche Cr(VI) in einem nach DIN 38 414-S4 hergestellten Extrakt photometrisch mit Diphenylcarbazid bestimmt. Für die Herstellung des Extrakts werden 100 g des entsprechenden Magnetbandes eingesetzt, angegeben wird die Menge Cr(VI) in mg pro Liter Extrakt.

Die Meßergebnisse sind in Tabelle 2 angegeben.

Beispiele B2 - B6, BV1, BV2, BV3, BV6

Es wurde wie in Beispiel B1 beschrieben verfahren, jedoch wurden die entsprechenden Chromdioxid-Proben der Beispiele 2 bis 6 sowie der Vergleichsversuche 1, 2, 3 und 6 eingesetzt. Die Meßergebnisse sind in der Tabelle 2 angegeben.

**Tabelle 2**

| | B1 | BV1 | B2 | BV2 | B3 | BV3 | B4 | B5 | B6 | BV6 |
|---|---|---|---|---|---|---|---|---|---|---|
| Hc | 43,7 | 43,9 | 37,9 | 37,9 | 40,1 | 40,2 | 44,3 | 44,5 | 37,7 | 37,8 |
| Mr | 161 | 159 | 165 | 167 | 159 | 167 | 161 | 152 | 158 | 157 |
| Stabilität | 87 | 82 | 85,1 | 80,3 | 89,5 | 86,1 | 84 | 84,1 | 94,4 | 92,5 |
| Eluat | 0 | 4,5 | 2,1 | 28 | 1,9 | 31 | 8,4 | 10,2 | 1,3 | 2,8 |
| $E_T$ | -0,6 | 0 | 0,6 | 0,4 | -0,2 | 0,5 | -1,2 | -1,2 | 0 | 0,1 |
| $E_H$ | 2,2 | 2,2 | 0,5 | 0 | -0,5 | 0 | 0,3 | 0 | -0,2 | -0,3 |
| $A_T$ | -0,6 | 0,3 | 1 | 0,7 | -0,2 | 0,5 | -1,2 | -1,2 | -0,2 | -0,1 |
| $A_H$ | 3 | 3 | -0,2 | -0,5 | -0,5 | 0 | 0,4 | 0,6 | -0,7 | -0,4 |
| $RG_O$ | 1,8 | 2 | 2 | 2 | 3 | 2 | 3 | 3 | 1,6 | 1,3 |
| $K_O$ | 56 | 59 | 56 | 56 | 57,5 | 57,5 | 60 | 59,5 | 59 | 59 |

**Patentansprüche**

1. Verfahren zur Herstellung von stabilisiertem nadelförmigem ferromagnetischem Chromdioxid durch Umsetzen von Oxiden das 3-wertigen und 6-wertigen Chroms bei 200 bis 600°C im Hochdruckreaktor bei 100 bis 700 bar in Gegenwart von Wasser unter Zusatz von mindestens einem Modifizierungsmittel und anschließende reduktive Behandlung der Oberfläche des Chromdioxids in einer wäßrigen Suspension unter Ausbildung einer Verbindung des 3-wertigen Chroms auf der Oberfläche, dadurch gekennzeichnet, daß auf der Oberfläche eines durch die reduktive Behandlung stabilisierten Chromdioxids 0,1 bis 5,0 Gew.%, bezogen auf die Menge Chromdioxid, einer ein- oder mehrbasischen Hydroxycarbonsäure mit 2 bis 6 Kohlenstoffatomen adsorbiert werden.

2. Verfahren gemäß Anspruch 1, dadurch gekennzeichnet, daß auf der Oberfläche des stabilisierten Chromdioxids 0,5 bis 2 Gew.%, bezogen auf die Menge Chromdioxid, Ascorbinsäure adsorbiert werden.

3. Verfahren gemäß Anspruch 1 oder 2, dadurch gekennzeichnet, daß das nach der Synthese erhaltene Chromdioxid vor der reduktiven Behandlung bei einer Temperatur zwischen 150 und 350°C getempert wird.

**Claims**

1. A process for the preparation of stabilized acicular ferromagnetic chromium dioxide by reaction of oxides of trivalent and hexavalent chromium at from 200 to 600°C in a high pressure reactor under from 100 to 700 bar in the presence of water with the addition of one or more modifiers and subsequent reductive treatment of the surface of the chromium dioxide in an aqueous suspension with formation of a compound of trivalent chromium on the surface, wherein from 0.1 to 5.0% by weight, based on the amount of chromium dioxide, of a monobasic or polybasic hydroxycarboxylic acid of 2 to 6 carbon atoms are adsorbed onto the surface of a chromium dioxide stabilized by the reductive treatment.

2. A process as claimed in claim 1, wherein from 0.5 to 2% by weight, based on the amount of chromium dioxide, of ascorbic acid are adsorbed onto the surface of the stabilized chromium dioxide.

3. A process as claimed in claim 1 or 2, wherein the chromium dioxide obtained by the synthesis is heated at from 150 to 350°C prior to the reductive treatment.

**Revendications**

1. Procédé de préparation d'un dioxyde de chrome ferromagnétique aciculaire stabilisé par réaction d'oxydes du chrome trivalent et du chrome hexavalent à des températures de 200 à 600 degrés C dans un réacteur résistant aux fortes pressions, à une pression de 100 à 700 bar en présence d'eau avec adjonction d'au moins un agent modifiant et traitement réducteur subséquent de la surface du dioxyde de chrome dans une suspension aqueuse avec formation d'un composé du chrome trivalent en surface, caractérisé en ce que l'on absorbe à la surface d'un dioxyde de chrome stabilisé par le traitement réducteur de 0,1 à 5,0 % en poids, par rapport à la quantité de dioxyde de chrome, d'un acide hydroxycarboxylique mono- ou poly-basique en C2-C6.

2. Procédé selon la revendication 1, caractérisé en ce que l'on absorbe à la surface du dioxyde de chrome stabilisé de 0,5 à 2 % en poids, par rapport à la quantité de dioxyde de chrome, d'acide ascorbique.

3. Procédé selon la revendication 1 ou 2, caractérisé en ce que le dioxyde de chrome obtenu après la synthèse et avant le traitement réducteur est recuit à une température de 150 à 350 degrés C.